# EUROPEAN PATENT APPLICATION

(11) **EP 2 095 990 A2**
(43) Date of publication of application: **02.09.2009**
(21) Application number: 09153109.5
(22) Date of filing: 18.02.2009
(51) Int. Cl.: B60N 2/20, B60N 2/235

(54) **Seat reclining apparatus for vehicle**

(30) Priority: 28.02.2008 JP 2008047883
(71) Applicant: Aisin Seiki Kabushiki Kaisha, Kariya-shi, Aichi 448-8650 (JP)
(72) Inventor: Kawamura, Tateki, Kariya-shi Aichi 448-8650 (JP); Kano, Yasutoshi, Kariya-shi Aichi 448-8605 (JP)
(74) Representative: TBK-Patent

(57) **Abstract**

A seat reclining apparatus for a vehicle (10) includes a lower frame (1c), a lower plate (1), an upper plate (20), an upper frame (1d), a first lock mechanism (4) arranged between the lower plate (1) and the upper plate (20) for permitting and restricting a relative rotation of the upper plate (20) to the lower plate (1), a second lock mechanism (9) arranged between the upper frame (1d) and the upper plate (20) for permitting and restricting a relative rotation of the upper frame (1d) to the upper plate (20), and a stopper member (8) rotatably supported by the lower frame (1c) and frictionally engageable with the upper plate (20), the stopper member (8) applying a resistance force to the relative rotation of the upper plate (20) to the lower plate (1).

## Description

### FIELD OF THE INVENTION

This invention generally relates to a seat reclining apparatus for a vehicle.

### BACKGROUND

A known seat reclining apparatus for a vehicle such as disclosed in JP2005-313833A includes a lower plate (base arm) attached to a lower frame (seat cushion frame) that supports a seat cushion for a vehicle seat, an upper plate (lock plate) rotatably supported by the lower plate, an upper frame (upper arm), and a reclining lock mechanism. The upper frame for supporting a seatback for the vehicle seat is rotatably supported by the lower frame via the upper plate and the lower plate, and is relatively rotatable with respect to the upper plate. The reclining lock mechanism is arranged between the lower plate and the upper plate. The reclining lock mechanism is switched between a rotation state in which the relative rotation of the upper plate with respect to the lower plate is permitted and a restriction state in which the relative rotation of the upper plate with respect to the lower plate is prohibited, upon an adjustment of a rotational position of the upper frame within a seating available range.

In order to move the seatback forward in a state where a reclining angle of the seatback (i.e., a reclining angle adjusted position) is kept or stored (i.e., walk-in operation) at a time of ingress and egress to and from a seat in the rear of the seatback (i.e., rear seat), the aforementioned seat reclining apparatus includes a reclining memory mechanism. The reclining memory mechanism includes a ratchet plate (ratchet) between the upper plate and the upper frame. The ratchet plate is fixed to the upper plate and is rotatably attached to (specifically, rotatably engageable with) the upper frame. When the engagement of the ratchet plate with the upper frame is released so that the upper frame rotates relative to the ratchet plate while the aforementioned restriction state of the reclining lock mechanism is being maintained, the walk-in operation is able to be performed with the reclining angle adjusted position being stored.

However, according to the aforementioned structure, in a case where an improper operation is conducted, i.e., the restriction state of the reclining lock mechanism is cancelled during the walk-in operation, for example, the upper plate and the ratchet plate are both rotatable regardless of the rotational position of the upper frame. Then, the ratchet plate may engage with the upper frame while a rotational angle phase of the upper plate relative to the lower plate at the seat reclining apparatus provided at a right side of the seat in the width direction of the vehicle is being different from that provided at a left side of the seat. When the reclining operation is then performed with the different rotational angle phases between right and left sides, an operational feeling may be extremely inferior.

Thus, the seat reclining apparatus disclosed in JP2005-313833A is equipped with operation limiting means (a first pivot restriction lever, a second pivot restriction lever, and a link lever) for prohibiting one of an unlock operation of the reclining lock mechanism and a memory operation of the reclining memory mechanism when the other one of the unlock operation of the reclining lock mechanism and the memory operation of the reclining memory mechanism is performed.

However, the aforementioned operation limiting means have a complicated structure, which may lead to a high cost and a restriction of space. In addition, in a case where one of the unlock operation of the reclining lock mechanism and the memory operation of the reclining memory mechanism is forcedly conduced while the other one of the unlock operation of the reclining lock mechanism and the memory operation of the reclining memory mechanism is being performed by the operation limiting means, a malfunction, a deterioration of an operating member, and the like may occur.

A need thus exists for a seat reclining apparatus for a vehicle which restraints a malfunction that may occur when a reclining lock mechanism and a reclining memory mechanism are simultaneously operated.

### SUMMARY OF THE INVENTION

According to an aspect of the present invention, a seat reclining apparatus for a vehicle includes a lower frame supporting a seat cushion of a seat for the vehicle, a lower plate mounted on the lower frame, an upper plate roratably supported by the lower plate, an upper frame supporting a seatback of the seat for the vehicle and roratably supported by the lower frame via the upper plate and the lower plate, the upper frame being relatively rotatable with respect to the upper plate, a first lock mechanism arranged between the lower plate and the upper plate, the first lock mechanism permitting and restricting a relative rotation of the upper plate to the lower plate, a second lock mechanism arranged between the upper frame and the upper plate, the second lock mechanism permitting and restricting a relative rotation of the upper frame to the upper plate, and a stopper member rotatably supported by the lower frame and frictionally engageable with the upper plate, the stopper member applying a resistance force to the relative rotation of the upper plate to the lower plate.

According to the aforementioned invention, the stopper member frictionally engages with the upper plate to thereby apply a resistance force to the relative rotation of the upper plate with respect to the lower plate. Therefore, even when the rotation of the upper plate relative to the lower plate is permitted by the first lock mechanism in a state where the rotation of the upper frame relative to the upper plate is permitted by the second lock mechanism, the rotation of the upper plate relative to the lower plate is restricted. As a result, the change of the reclining memory angle determined on the basis of the relative position between the upper plate and the lower plate is restrained. In addition, even when a load is applied to the upper plate, the rotation of the upper plate is restricted by the stopper member, thereby restraining the change of the reclining memory angle.

The stopper member is formed into an elongated lever shape including a support portion at a first end and a slide portion at a second end, the support portion being rotatably supported by the lower frame and the slide portion being frictionally engageable with the upper plate, the seat reclining apparatus further including a spring of which one end engages with the stopper member and of which the other end is supported by the lower frame, the spring being disposed around the support portion and biasing the stopper member to rotate in a direction where the slide portion makes contact with the upper plate.

The spring is disposed around the support portion of the stopper member for biasing the stopper member to rotate in a direction where the slide portion makes contact with the upper plate. In a case where a large load that exceeds the biasing force of the spring is applied to the upper plate and that exceeds the frictional engagement force of the stopper member, the rotation of the upper plate is permitted, thereby preventing the large load from being concentrated and applied to the slide portion of the stopper member. The deformation, damage, and the like of the stopper member are avoidable accordingly. The excessive strength of the stopper member is not required. Further, increase of weight, cost, and space of the stopper member for ensuring the strength are nor required.

The upper plate includes a peripheral surface with which the slide portion of the stopper member makes contact and a projection portion continuously formed from the peripheral surface to extend therefrom and making contact with an end of the slide portion to restrict the relative rotation of the upper plate to the lower plate.

When the large load is applied to the upper plate, the slide portion of the stopper member slidably moves along the peripheral surface. Then, the movement of the slide portion is blocked by the projection portion that extends from the peripheral surface. Accordingly, the upper plate is prevented from excessively rotating to thereby restrain the change of the reclining memory angle.

The upper plate includes an internally toothed gear plate including internal teeth engageable and disengageable with the first lock mechanism and a ratchet plate fixed to the internally toothed gear plate and including external teeth engageable and disengageable with the second lock mechanism.

The angle of the upper plate relative to the lower plate that is adjusted by the first lock mechanism (i.e., reclining angle) is stored. When the engagement between the second lock mechanism and the external teeth of the ratchet plate is released, the rotation of the upper frame relative to the upper plate is permitted with the reclining memory angle being maintained. Thus, the walk-in operation is achievable with the reclining memory angle being maintained.

The ratchet plate includes the peripheral surface and the projection portion.

In a case where the engagement between the second lock mechanism and the ratchet plate is released, and further the first lock mechanism is in the unlocked state; the stopper member frictionally engages with the peripheral surface of the ratchet plate, thereby restricting the rotation of the ratchet plate. The ratchet plate is able to restrict the rotation of the gear plate integrally fixed to the ratchet plate, so that a possible change or displacement of the reclining memory angle is restrained.

### BRIEF DESCRIPTION OF THE DRAWINGS

The foregoing and additional features and characteristics of the present invention will become more apparent from the following detailed description considered with reference to the accompanying drawings, wherein:

Fig. 1 is a side view illustrating a vehicle seat to which a seat reclining apparatus for a vehicle according to an embodiment of the present invention is mounted;

Fig. 2 is an exploded perspective view mainly illustrating a lower plate and a gear plate provided at the seat reclining apparatus;

Fig. 3 is a cross-sectional view taken along a center portion of the vehicle seat shown in Fig. 1;

Fig. 4 is a cross-sectional view taken along the line IV-IV in Fig. 3 and illustrating a locked state of first and second pawls;

Fig. 5 is a cross-sectional view taken along the line V-V in Fig. 3 and illustrating an unlocked state of the first and second pawls;

Fig. 6 is a perspective view of the first pawl shown in Figs. 4 and 5;

Fig. 7 is a perspective view of the second pawl shown in Figs. 4 and 5;

Fig. 8 is an exploded perspective view mainly illustrating a ratchet plate provided at the seat reclining apparatus;

Fig. 9 is an explanatory view illustrating an operation of the ratchet plate and a stopper member in a case where a reclining lock mechanism and a reclining memory mechanism are each in a locked state;

Fig. 10 is an explanatory view illustrating an operation of the ratchet plate and the stopper member in a case where the reclining lock mechanism and the reclining memory mechanism are each in an unlocked state;

Fig. 11 is an explanatory view illustrating an operation of the ratchet plate and the stopper member in a case where the reclining lock mechanism and the reclining memory mechanism are each in the unlocked state and a large load is applied to the ratchet plate; and

Fig. 12 is an explanatory view illustrating an operation of the ratchet plate and the stopper member in a case where the reclining lock mechanism is in the locked state while the reclining memory mechanism is in the unlocked state and an extremely large load is applied to the ratchet plate.

### DETAILED DESCRIPTION

An embodiment of a seat reclining apparatus for a vehicle will be explained with reference to the attached drawings. Directions such as top, bottom, front, and rear described hereinbelow or indicated by arrows in the attached drawings correspond to orientations of a vehicle to which the seat reclining apparatus of the present embodiment is mounted. A seat reclining apparatus for a vehicle 10 (hereinafter simply referred to as a seat reclining apparatus 10) according to the present embodiment is provided at each side of a vehicle seat in a width direction (i.e., right and left direction). In the following, a structure of one seat reclining apparatus 10 will be explained, however, the other seat reclining apparatus 10 has substantially the same structure.

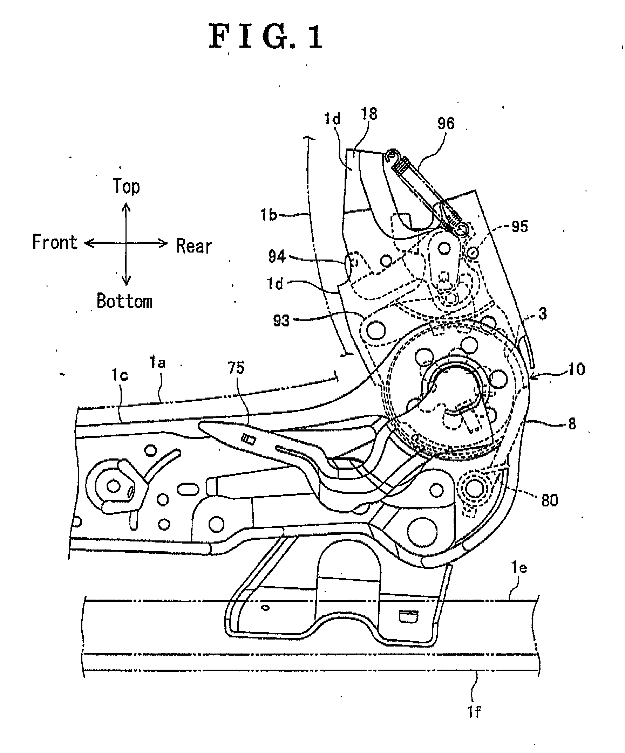

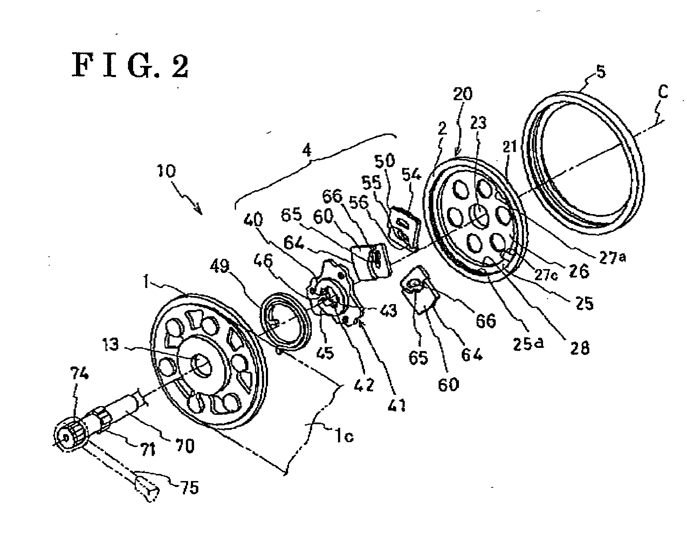

As illustrated in Figs. 1 and 2, the seat reclining apparatus 10 includes a lower frame 1 c, a lower plate 1, an upper plate 20, an upper frame 1 d, a reclining lock mechanism 4, and a reclining memory mechanism 9. The lower frame 1c supports a seat cushion 1a. The lower plate 1 is attached to the lower frame 1c. The upper plate 20 is rotatably supported by the lower plate 1. The upper frame 1d, which supports a seatback 1b, is relatively rotatable with respect to the upper plate 20. The reclining lock mechanism 4 serving as a first lock mechanism permits or restricts a relative rotation of the upper plate 20 with respect to the lower plate 1. The reclining memory mechanism 9 serving as a second lock mechanism permits or restricts a relative rotation of the upper frame 1d with respect to the upper plate 20. The upper plate 20 includes an internally toothed gear plate 2 that is engageable and disengageable with the reclining lock mechanism 4, and a ratchet plate 3 that is engageable and disengageable with the reclining memory mechanism 9.

The lower frame 1c is provided at each side of the seat cushion 1a in the width direction (i.e., the lower frames 1c are provided at right and left sides) so as to extend in a longitudinal direction of the vehicle. Each lower frame 1c is formed by a press-molding and to which .an upper rail 1e is connected. The upper rail 1e is slidably attached to a lower rail 1f fixed to a surface of a vehicle floor. The lower frames 1c arranged at right and left sides of the seat cushion 1a are connected to each other by means of a rod that extends in the right and left direction (width direction) of the vehicle.

The upper frame 1d is provided at each side of the seatback 1b in the width direction (i.e., the upper frames 1d are provided at the right and left sides) so as to extend in a vertical direction of the vehicle when the vehicle seat is in a seating state. The upper frames 1d arranged at the right and left sides of the seatback 1b are connected to each other by means of a rod that extends in the right and left direction (width direction) of the vehicle. As illustrated in Fig. 1, a lower end portion of the upper frame 1d is positioned at an inner side in the width direction of a rear end portion of the lower frame 1c. The lower end portion of the upper frame 1d and the rear end portion of the lower frame 1c are operatively connected to each other via the lower plate 1, the gear plate 2, and the like. The upper frame 1d is biased in a direction where the seatback 1b is tilted forward by mean of a spring.

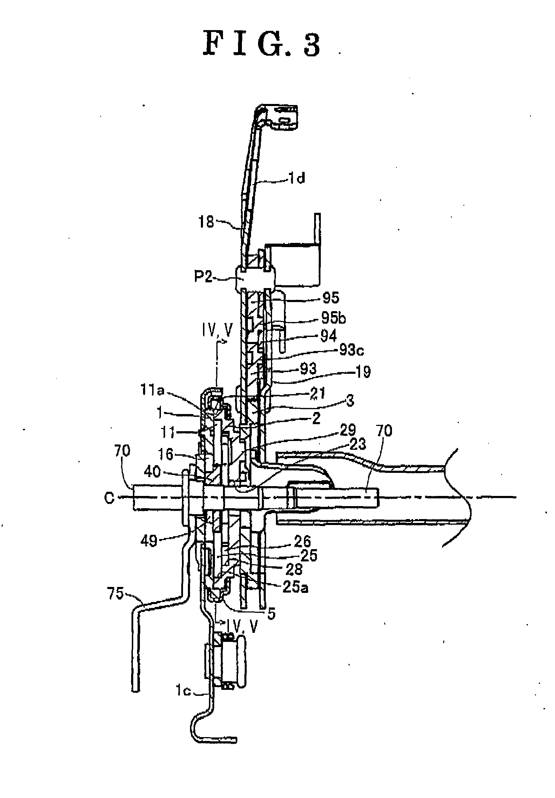

As illustrated in Figs. 2 and 3, the lower plate 1 having a disc shape is fixed to the lower frame 1c by means of welding. The gear plate 2 is fixed to the ratchet plate 3, which is engageable and disengageable with the reclining memory mechanism 9, by means of welding.
The gear plate 2 is rotatably attached to the lower plate 1 via the reclining lock mechanism 4.
The ratchet plate 3 is rotatably attached to the upper frame 1d via the reclining memory mechanism 9.

The lower plate 1 includes a recess portion 11 opening towards and facing the gear plate 2 and molded by half die cutting. The recess portion 11 includes an inner peripheral surface 11a centered at a rotational axis C of both of the gear plate 2 and the lower plate 1. The gear plate 2 includes an outer peripheral surface 21 that makes slidable contact with the inner peripheral surface 11a of the lower plate 1. When the gear plate 2 rotates relative to the lower plate 1, the outer peripheral surface 21 of the gear plate 2 functions as a shaft while the inner peripheral surface 11a of the lower plate 1 functions as a bearing.

A folder 5 is arranged to cover outer peripheries of the gear plate 2 and the lower plate 1. The folder 5 makes contact with the lower plate 1 at a side surface (i.e., inner peripheral surface) and maintains the gear plate 2 and the lower plate 1 to be rotatable with respect to each other. In addition, the folder 5 is processed, being bent to assemble and hold the lower plate 1 on the gear plate 2 in the final process of the assembly of the seat reclining apparatus 10.

The gear plate 2 includes a recess portion 25 molded by half die cutting and opening towards the lower plate 1. Internal teeth 25a are formed at an entire inner periphery of the recess portion 25 centered at the rotational axis C thereof. Another recess portion 26 is concentrically formed at a radially inner side of the recess portion 25 in a stepped manner by half die cutting. Projections 27a and 27c (see Fig. 2) are formed at a portion of an inner periphery 28 of the recess portion 26.

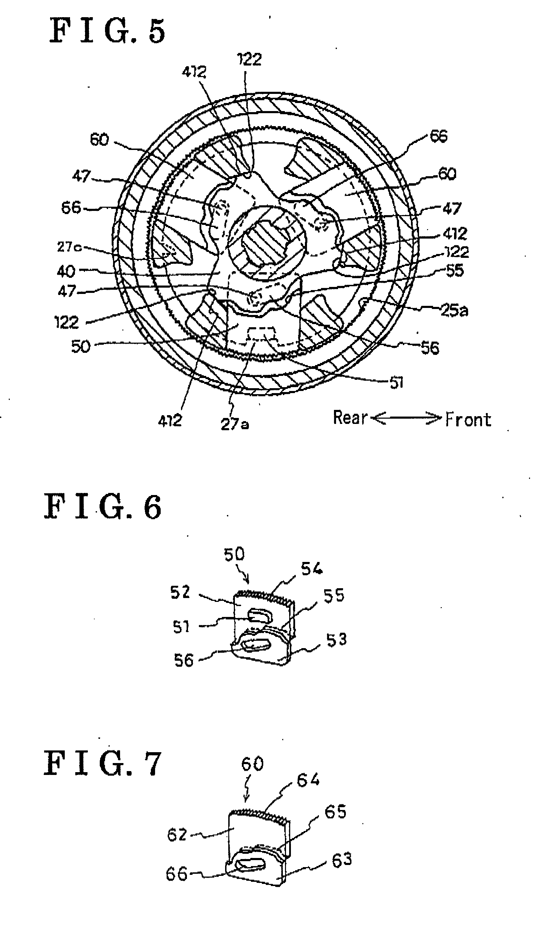

The reclining lock mechanism 4 is provided between the lower plate 1 and the gear plate 2. The reclining lock mechanism 4 includes two types of pawls, i.e., one first pawl 50 and two second pawls 60, arranged at equally spaced angles within a surface perpendicular to the rotational axis C. As illustrated in detail in Figs. 6 and 7, the pawl 50 includes a projection 51 on a surface. Each of the second pawls 60 has the same shape as that of the first pawl 50 and only differs from the first pawl 50 in that the second pawl 60 does not include a projection such as the projection 51.

Each of the pawls 50 and 60 is made by a plate-shaped steel material. The pawl 50 includes a first surface portion 52 and a second surface portion 53 to be connected to each other in a stepped manner. In the same way, the pawl 60 includes a first surface portion 62 and a second surface portion 63 to be connected to each other in a stepped manner. As a whole, each of the pawls 50 and 60 is formed into substantially a rectangular shape. The pawl 50 includes external teeth 54 at an end surface of the first surface portion 52 to be engageable with the internal teeth 25a of the gear plate 2. In the same way, the pawl 60 includes external teeth 64 at an end surface of the first surface portion 62 to be engageable with the internal teeth 25a of the gear plate 2. A back cam surface 55 is formed at an opposite end surface of the external teeth 54 at a stepped portion between the first surface portion 52 and the second surface portion 53. In addition, a back cam surface 65 is formed is formed at an opposite end surface of the external teeth 64 at a stepped portion between the first surface portion 62 and the second surface portion 63. Further, an elongated cam hole 56 is formed at the second surface portion 53 so as to penetrate in a thickness direction thereof. In the same way, an elongated cam hole 66 is formed at the second surface portion 63 so as to penetrate in a thickness direction thereof. Both end portions (surfaces) of the pawl 50 in a width direction across the external teeth 54 and perpendicular to the thickness direction are in parallel with each other. In the same way, both end portions (surfaces) of the pawl 60 in a width direction across the external teeth 64 and perpendicular to the thickness direction are in parallel with each other.

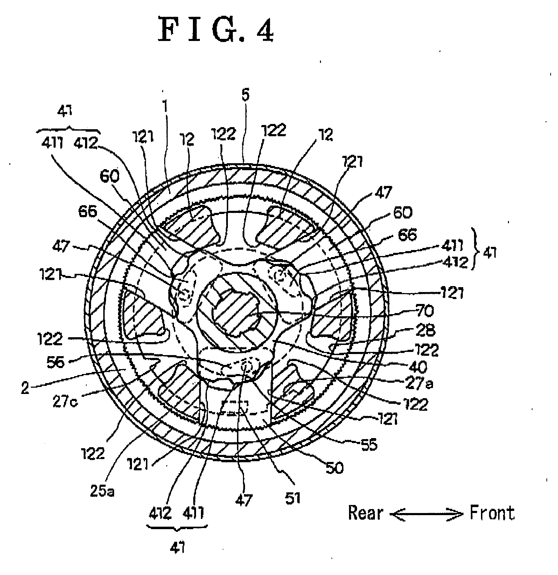

As illustrated in Fig. 4, six recess portions 12 are formed inside of the recess portion 11 of the lower plate 1. Each of the recess portions 12 is formed by half die cutting to open in a direction opposite from a direction where the recess portion 11 is opening. Six recess portions 12 are grouped into three pairs, each pair being constituted by the recess portions 12 facing each other across one of the pawls 50 and 60. Three pairs of recess portions 12 are arranged at equally spaced intervals in a circumferential direction of the recess portion 11 relative to the rotational axis C and at equal distances from the rotational axis C. Each of the recess portions 12 includes a guide wall 121 (slide portion) and a cam engagement portion 122 (engagement portion). The guide walls 121 of the recess portions 12 in the same group face in parallel with each other. A width (length) between the facing guide walls 121 is substantially the same as a width of each of the pawls 50 and 60. Each of the pawls 50 and 60 is slidably movable towards or away from the rotational axis C while being fitted into a space between the facing guide walls 121 and being guided thereby. Since the guide wall 121 and the cam engagement portion 122 are integrally formed at the recess portion 12, the number of components of the seat reclining apparatus 10 as a whole is reduced to thereby achieve a compact structure.

The reclining lock mechanism 4 further includes a cam 40. The cam 40 includes a cam surface 41 that is arranged to be rotatable about the rotational axis C within the recess portion 25 of the gear plate 2. Specifically, three cam surfaces 41 are arranged at equally spaced angles relative to the rotational axis C. Each of the cam surfaces 41 includes a pawl pressing portion 411 and an aligning portion 412. The pawl pressing portion 411 is capable of making contact with each of the back cam surfaces 55 and 65 of the pawls 50 and 60 (see Figs. 6 and 7). The external teeth 54 and 64 of the pawls 50 and 60, respectively, are pressed to engage with the internal teeth 25a of the gear plate 2 by means of the rotation of the cam 40.. The aligning portion 412 is engageable and disengageable with the cam engagement portion 122 of the recess portion 12. That is, three aligning portions 412 engage with three cam engagement portions 122, respectively, at substantially the same time by means of the rotation of the cam 40. In addition, projection pins 47 are formed at respective portions of a surface of the cam 40 between the respective cam surfaces 41 and the rotational axis C. The projection pins 47 extend to be inserted into the elongated cam holes 56 and 66 of the pawls 50 and 60, respectively.

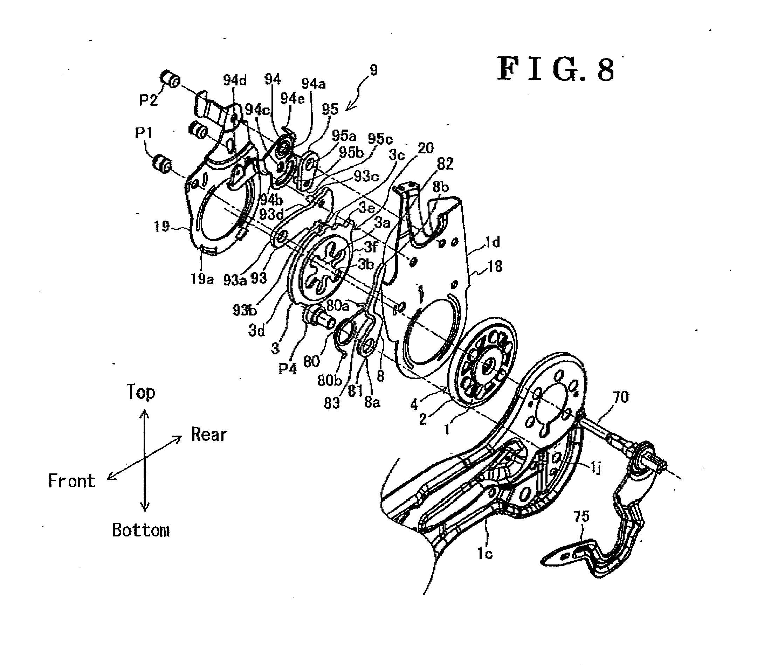

As illustrated in Figs. 2 and 4, a hinge shaft 70 is inserted into through-holes 13, 42, 23, and 3a (see Fig. 8) formed at the lower plate 1, the cam 40, the gear plate 2, and the ratchet plate 3, respectively, so as to support the lower plate 1, the cam 40, the gear plate 2, and the ratchet plate 3 to be rotatable with respect to the hinge shaft 70. The hinge shaft 70 is arranged on the rotational axis C. Further, a spline portion 71 is provided at a substantially axially center of the hinge shaft 70. The spline portion 71 includes multiple grooves at an outer periphery thereof that extend axially and opens radially. The through-hole 42 of the cam 40 includes a female spline portion 43 that engages with the spline portion 71 of the hinge shaft 70. The hinge shaft 70 and the cam 40 are configured to integrally rotate. The spline portion 43 of the cam 40 is formed to be slightly larger than the spline portion 71 of the hinge shaft 70, thereby forming a clearance between the cam 40 and the hinge shaft 70 in a radial direction. Accordingly, the cam 40 is movable relative to the hinge shaft 70 (i.e., movable around the hinge shaft 70) within the recess portion 25 of the gear plate 2 so as to move in directions where the pawl pressing portions 411 are formed.

The hinge shaft 70 further includes a serration portion 74 at an outer periphery of one of axial end portions. The serration portion 74 includes multiple tooth grooves extending in an axial direction thereof A reclining operation handle 75 having a serration portion that engages with the serration portion 74 of the hinge shaft 70 is integrally attached to the serration portion 74 of the hinge shaft 70. The operation handle 75 is provided at only one of the seat reclining apparatuses 10 at the right and left sides. With the exception of this point, the seat reclining apparatuses 10 provided at the right and left sides have the same structures as each other.

As illustrated in Fig. 3, the lower plate 1 includes a recess portion 16 concentric with the recess portion 11 and formed at a radially inner side thereof in a stepped manner by half die cutting. A groove is formed at a portion on an inner peripheral surface of the recess portion 16 to extend radially outwardly. The cam 40 includes a boss portion 45 where a groove 46 is formed as illustrated in Fig. 2. Then, a spiral spring 49 of which one end engages with the groove formed at the recess portion 16 and of which the other end engages with the groove 46 of the cam 40 is provided in such a manner that a center of the spring 49 substantially matches the rotational axis C. The spring 49 biases the cam 40 to rotate in a counterclockwise direction in Fig, 4. As a result, the pawls 50 and 60 move in a radially outward direction (towards the internal teeth 25a) from the rotational axis C by means of movements of the projection pins 47 formed at the cam 40 and the elongated cam holes 56 and 66 formed at the pawls 50 and 60. At the same time, the back cam surfaces 55 and 65 of the pawls 50 and 60 are pressed in the radially outward direction (towards the internal teeth 25a) by the pawl pressing portions 411 of the respective cam surfaces 41. The internal teeth 25a, and the external teeth 54 and 64 strongly engage with each other accordingly.

Fig. 8 is an exploded perspective view illustrating a structure for assembling the ratchet plate 3 and the reclining memory mechanism 9 on each other. As illustrated in Figs. 8 and 3, the ratchet plate 3, which is formed into a disc shape, includes the through-hole 3a at a center. The ratchet plate 3 and the reclining memory mechanism 9 are arranged between two frame members 18 and 19 constituting a portion of the upper frame 1d. The frame members 18 and 19 are connected to a main frame also constituting the upper frame 1d. A recess portion 3b formed at an inner periphery of the through-hole 3a of the ratchet plate 3 engages with a protruding portion 29 formed at the gear plate 2 (see Fig. 3). The ratchet plate 3 and the gear plate 2 are fixed by means of welding.

A pawl 93, a lever 94, and a cam 95 each serving as a structural member of the reclining memory mechanism 9 are provided between the frame members 18 and 19. A pin P1 fixed to both of the frame members 18 and 19 is inserted into a through-hole 93a formed at the pawl 93 in such a manner that the pawl 93 is rotatably supported by the pin P1. A protruding portion 93b formed at the pawl 93 engages with a recess portion 3c formed at an outer peripheral surface of the ratchet plate 3. The recess portion 3c serves as an engagement portion and/or external teeth.

A pin P2 fixed to both of the frame members 18 and 19 is inserted into a through-hole 94a formed at the lever 94 and a through-hole 95a formed at the cam 95. The lever 94 and the cam 95 are rotatably supported by the pin P2. Because a pin 95b formed at the cam 95 by stamping is fitted into a hole 94c formed at the lever 94, the cam 95 is non-rotatable with respect to the lever 94. The cam 95 and the lever 94 integrally rotate.

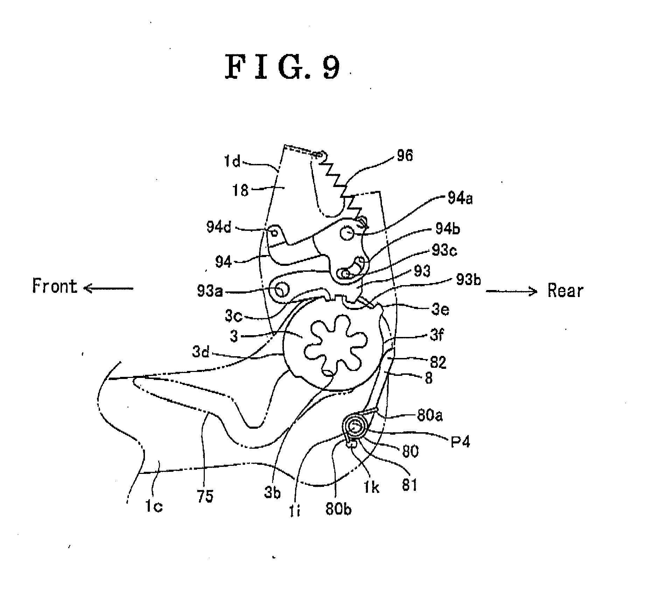

A pin 93c formed at the pawl 93 by stamping is slidably inserted into an elongated bore 94b having a cloud shape and formed at the lever 94. The pawl 93 rotates along with the rotation of the lever 94 by means of the elongated bore 94b and the pin 93c. A spring 96 (see Fig. 9) of which one end engages with the lever 94 and of which the other end engages with the frame member 18 of the upper frame 1d biases the lever 94 to rotate in the counterclockwise direction in Fig. 8. A wire operating together with a walk-in operation handle is connected to an end portion 94d of the lever 94.

The recess portion 3c engaging with the pawl 93, an are surface 3d connected to the recess portion 3c, a projection portion 3e, and a slide surface 3f (a peripheral surface) are formed at the outer peripheral surface of the ratchet plate 3. The projection portion 3e is formed at an opposite side from the arc surface 3d relative to the recess portion 3c so as to extend outwardly. The slide surface 3f is formed into an arc shape between the projection portion 3e and the arc surface 3d. The frame member 19 includes a stopper 19a extending towards the frame member 18. When the ratchet plate 3 rotates in the counterclockwise direction in Fig. 8, the protruding portion 3e makes contact with the stopper 19a to thereby restrict the rotation of the ratchet plate 3.

A stopper member 8 is in contact with the slide surface 3f of the ratchet plate 3 in a frictionally engageable manner. The stopper member 8 is pivotally supported by the lower frame 1c. The stopper member 8, which is formed into an elongated lever shape, includes a stepped portion 83 bent in a thickness direction thereof at a substantially center portion. The stopper member 8 also includes a first end 8a where a pivot hole 81 serving as a support potion is formed, and a second end 8b where a slide portion 82 is formed to frictionally engage with the slide surface 3f of the ratchet plate 3. A pin P4 is inserted into the pivot hole 81 and a hole 1j formed at the lower frame 1c to thereby support the stopper member 8 to be rotatable with respect to the,lower frame 1c. A spring 80 is disposed at a side peripheral surface of the pin P4 that is inserted into the pivot hole 81 of the stopper member 8. One end 80a of the spring 80 engages with the stepped portion 83 of the stopper member 8 while the other end 80b engages with an engagement portion 1k (see Fig. 9) formed at the lower frame 1c.

A reclining operation, a forward tilting operation, and a walk-in operation performed by the seat reclining apparatus 10 having the aforementioned structure for the vehicle seat will be explained below. The reclining operation is provided for adjusting a rotational position of the seatback 1b within a seating available range for an occupant or a passenger. The forward reclining operation and the walk-in operation are provided for bringing the rotational position of the seatback 1b forward (i.e., forward tilting position or state) relative to the seating available range so that ingress and egress to and from a seat in the rear of the seatback 1b (i.e., rear seat) is easily performed. More specifically, the forward tilting operation is performed when an occupant seated on the seat where the seat reclining apparatus 10 according to the present embodiment is provided operates the operation handle 75. The walk-in operation is mainly performed when an occupant seated on the rear seat, an operator stepping out of the vehicle, or the like operates an operation lever provided at an upper portion of the seatback 1b.

### [Reclining operation]

Fig. 4 illustrates a locked state of the reclining lock mechanism 4. In the locked state, the pawl pressing portions 411 of the cam 40 and the back cam surfaces 55 and 65 of the pawls 50 and 60 are in contact with each other, The pawls 50 and 60 are pressed by the pawl pressing portions 411 of the cam 40, so that the external teeth 54 and 64 of the pawls 50 and 60 and the internal teeth 25a of the gear plate 2 engage with each other. As a result, the rotation of the gear plate 2 relative to the lower plate 1 is restricted. In such case, because the cam 40 is movable relative to the hinge shaft 70 within the recess portion 25 in a direction where the pawl pressing portions 411 are formed, the cam 40 substantially uniformly presses the three pawls 50 and 60 to thereby obtain the secure locked state of the reclining lock mechanism 4 without looseness.

When the operation handle 75 is operated in the aforementioned locked state, the hinge shaft 70 integrally rotates with the cam 40 in the clockwise direction in Fig. 4 against a biasing force of the spring 49. Then, the pawl pressing portions 411 of the cam surfaces 41 disengage from the respective back cam surfaces 55 and 65 of the pawls 50 and 60. At the same time, the pawls 50 and 60 are pulled towards the rotational axis C along the respective guide walls 121 by means of movements of the elongated cam holes 56 and 66 of the pawls 50 and 60, and the projection pins 47 inserted into the respective cam holes 56 and 66. As a result, the external teeth 54 and 64 of the pawls 50 and 60 disengage from the internal teeth 25a. The seatback 1b supported by the upper frame 1d is movable to a desired position relative to the seat cushion 1a supported by the lower frame 1c accordingly. At this time, as illustrated in Fig. 9, the recess portion 3c of the ratchet plate 3 engages with the protruding portion 93b of the pawl 93. Thus, the ratchet plate 3 integrally rotates with the frame members 18 and 19 constituting a portion of the upper frame 1d, and the gear plate 2.

The three aligning portions 412 of the cam 40 make engagement with the three cam engagement portions 122 at substantially the same time so that the cam 40 is centered by means of the cam engagement portions 122. Thus, clearances formed between the internal teeth 25a and the external teeth 54 and 64 of the respective pawls 50 and 60 are substantially equal to each other. A possible rotational failure between the upper plate 20 and the lower plate 1 or deterioration in operational feeling because of an engagement between the pawls 50, 60 and a portion of the upper plate 20 (gear plate 2) can be eliminated.

### [Forward tilting operation]

In a case where the seatback 1b is tilted forward to rotate relative to the seat cushion 1a beyond a predetermined angle, i.e., into a forward tilting angle range, while the locked state of the reclining lock mechanism 4 is being released (i.e., the reclining lock mechanism 4 is in an unlocked state), the projection 27a formed at the inner periphery of the recess portion 26 of the gear plate 2 rotates in the clockwise direction in Fig. 4. The projection 27a moves to be positioned between the projection 51 formed at a surface of the pawl 50 and the internal teeth 25a as illustrated in Fig. 5. When the operation handle 75 is released in such state, the cam 40 presses the pawl 50 in a direction where the pawl 50 engages with the internal teeth 25a by means of the biasing force of the spring 49. However, the movement of the pawl 50 is blocked by the projections 27a and 51 in contact with each other, thereby preventing the engagement between the pawl 50 and the internal teeth 25a. At this time, two pawls 60 are retained at positions where the pawls 60 are prevented from engaging with the internal teeth 25a by means of movements of the elongated cam holes 66 and the projection pins 47 inserted thereto, respectively.

Accordingly, the seatback 1b is able to rotate into the forward tilting angle range without the reclining lock mechanism 4 to be brought to the locked state. The seatback 1b greatly rotates forward at once by means of a biasing force of the spring arranged to bias the seatback 1b forward relative to the seat cushion 1a, thereby facilitating ingress and egress to and from the rear seat. At this time, because the ratchet plate 3 is in engagement with the protruding portion 93b of the pawl 93, the ratchet plate 3 integrally rotates with the frame members 18 and 19 constituting a portion of the upper frame 1d.

When the seatback 1b is returned from the forward tilting state to a position where an occupant can be seated again by the operation of the operation handle 75 and the operation handle 75 is then released, the pawls 50, 60, and the cam 40 are returned to the respective positions shown in Fig. 4 to thereby achieve the strong locked state of the reclining lock mechanism 4.

As specifically shown in Fig. 4, the three pawls 50 and 60 constituting the reclining lock mechanism 4 are arranged at a radially inner side of the internal teeth 25a. The internal teeth 25a with which the pawls 50 and 60 engage are not divided or separated and are continuously formed. That is, when the projection 27a rotates in the counterclockwise direction in Fig. 4 to be arranged at a position where the pawl 60 is positioned (i.e., the projection 27a partially or fully overlaps with the pawl 60 in Fig. 4), all the pawls 50 and 60 are engageable with the internal teeth 25a because each of the pawls 60 does not include a projection such as the projection 51 that prevents the pawl 60 from engaging with the internal teeth 25a. In addition, because the internal teeth 25a are formed at the entire inner periphery of the recess portion 25, the external teeth 54 and 64 of the pawls 50 and 60 are engageable with any portion of the internal teeth 25a. That is, each of the external teeth 54 and 64 of the pawls 50 and 60 are engageable with the entire internal teeth 25a. An operational angle range in the rearward of the seatback 1b increases accordingly.

When the seatback 15 is tilted rearward relative to the seat cushion 1a to move behind the seating available range, the projection 27c serving as second stopper means formed at the inner periphery of the recess portion 26 of the gear plate 2 rotates in the counterclockwise direction in Fig. 4 to make contact with the projection 51 serving as first stopper means formed at the surface of the pawl 50. Consequently, the rotation of the gear plate 2 in the counterclockwise direction is limited.

### [Walk-in operation]

Next, an operation performed when the seatback 1b is forwardly tilted in a state where a reclining angle of the seatback 1b (i.e., a reclining angle adjusted position) is stored upon ingress and egress to and from the rear seat in the rear of the seatback 1b will be explained below. When the operation lever provided at the upper portion of the seatback 1b is operated by an occupant in the rear seat or an operator outside of the vehicle in the locked state shown in Fig. 4, the end portion 94d of the lever 94 is pulled upward by mean of the wire to thereby rotate the lever 94 in the clockwise direction in Fig. 8 about the through-hole 94a against the biasing force of the spring 96 (see Fig. 9).

Then, the pin 93c of the pawl 93 is pulled upward by means of an inner peripheral surface of the elongated bore 94b of the lever 94 into which the pin 93c is inserted, thereby rotating the pawl 93 in the counterclockwise direction in Figs. 8 and 9. The engagement between the recess portion 3c of the ratchet plate 3 and the protruding portion 93b of the pawl 93 is released, which results in the frame members 18 and 19 constituting a portion of the upper frame 1d to be rotatable with respect to the ratchet plate 3. The seatback 1b is movable and rotatable into the forward tilting angle range as in the same way as the forward tilting operation. The seatback 1b greatly rotates at once by means of the biasing force of the spring, thereby facilitating ingress and egress to and from the rear seat.

At this time, because the three pawls 50 and 60 are each in the locked state, i.e., the pawls 50 and 60 engage with the internal teeth 25a, the lower plate 1, the gear plate 2, and the ratchet plate 3 are non-rotatable with respect to the lower frame 1c. Accordingly, the seatback 1b rotates forward in a state where the rotational angle of the gear plate 2 relative to the lower plate 1, i.e., the reclining angle adjusted position, is stored.

Once the forward rotation of the seatback 1b is started and then the protruding portion 93b of the pawl 93 disengages from the recess portion 3c of the ratchet plate 3, the protruding portion 93b only moves and slides on the arc surface 3d of the ratchet plate 3 even if the occupant or the operator releases the operation lever provided at the upper portion of the seatback 1b. The forward rotation of the seatback 1b is still available. The seatback 1b greatly rotates at once by means of the biasing force of the spring, thereby facilitating ingress and egress to and from the rear seat.

In a case where the seatback 1b is pulled rearward from the forward tilting state as mentioned above, the pawl 93 also moves rearward along with the rotation of the frame members 18 and 19. The protruding portion 93b of the pawl 93 slidably moves on the arc surface 3d of the ratchet plate 3 accordingly. At this time, the lever 94 and the cam 95 are biased by the spring 96 in the counterclockwise direction in Fig. 8. Then, a lower end portion 95c of the cam 95 presses an upper end portion 93d of the pawl 93. Accordingly, the pawl 93 is biased in the clockwise direction in Fig. 8, thereby pressing the protruding portion 93b of the pawl 93 against the arc surface 3d. When the protruding portion 93b that is slidably moving reaches a point where the recess portion 3c is formed, the protruding portion 93b makes engagement with the recess portion 3c.

### [When improper operation is conducted]

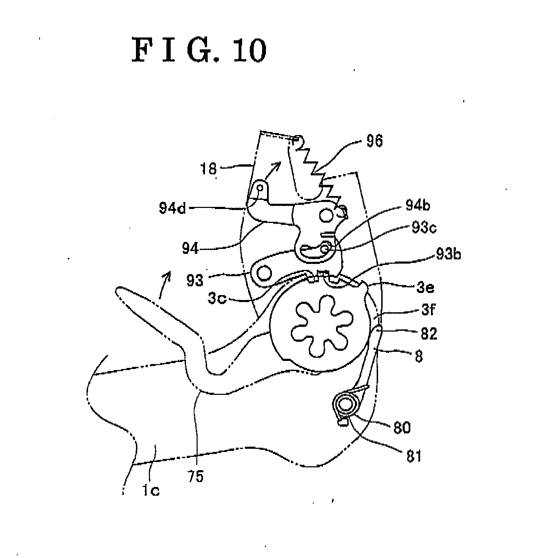

In a case where an improper operation is conducted, i.e., the operation handle 75 is operated during the walk-in operation and thus the external teeth 54 and 64 of the pawls 50 and 60 disengage from the internal teeth 25a of the gear plate 2, for example, the gear plate 2 and the ratchet plate 3 to which the gear plate 2 is fixed may be rotatable with respect to the lower plate 1 regardless of the rotational position of the seatback 1b. However, according to the present embodiment, the ratchet plate 3, which is provided at each side of the vehicle seat in the width direction, frictionally engages with the slide portion 82 of the stopper member 8 via the slide surface 3f as illustrated in Fig. 10. Thus, the rotation of the gear plate 2, which is fixed to the ratchet plate 3, relative to the lower plate 1 is restricted. Even when the gear plate 2 is allowed to relatively rotate with respect to the lower plate 1 by means of the operation of the operation handle 75, the rotation of the gear plate 2 relative to the lower plate 1 is still restricted by means of a rotational resistance force (resistance force) received by the ratchet plate 3. As a result, change of a reclining memory angle determined on the basis of the relative position between the gear plate 2 and the lower plate 1 is restrained. In addition, even when a load is applied to the gear plate 2, change of the reclining memory angle is restrained because the rotation of the gear plate 2 is restricted by the stopper member 8.

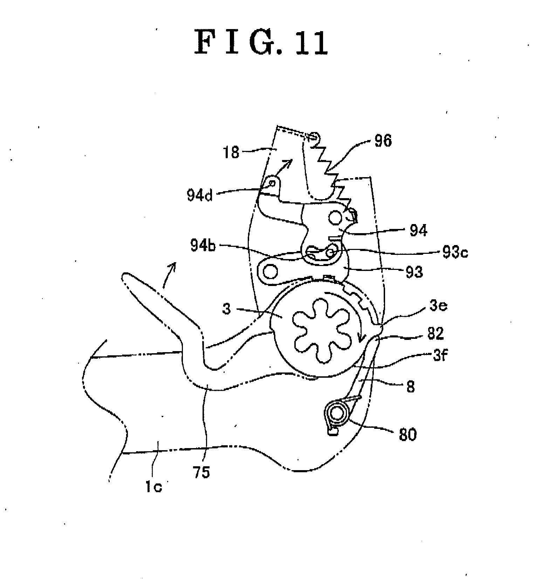

Further, as illustrated in Fig. 11, in a case where a load is applied in the rearward direction to the seatback 1b by a forceful rearward rotation thereof so that a large load exceeding a frictional engagement force generated between the ratchet plate 3 and the stopper member 8 is applied to the ratchet plate 3 in the clockwise direction in Fig. 11 in a state where an improper operation is conducted, i.e., the operation handle 75 is operated during the walk-in operation and thus the external teeth 54 and 64 of the pawls 50 and 60 disengage from the internal teeth 25a of the gear plate 2, for example, the ratchet plate 3 slightly rotates in the clockwise direction in Fig. 11. When the large load is applied to the ratchet plate 3, the ratchet plate 3 rotates while the slide portion 82 of the stopper member 8 is slidably in contact with the slide surface 3f. Then, the stopper member 8 makes contact with the projection portion 3e continuously formed at the slide surface 3f. The projection portion 3e projects, interrupting the direction of movement of the stopper member 8. Therefore, at this time, the projection portion 3e receives the frictional engagement force larger than that which is received when the stopper member 8 slides on the slide surface 3f, from the slide portion 82 of the stopper member 8. As a result, the rotation of the ratchet plate 3 is restricted by means of the large frictional engagement force received at the projection portion 3e.

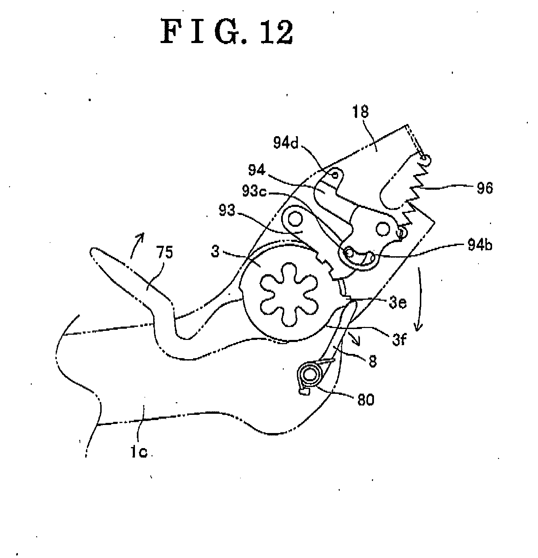

Then, after the state illustrated in Fig. 11, the protruding portion 93b of the pawl 93 engages with the recess portion 3c of the ratchet plate 3 while the slide portion 82 of the stopper member 8 is in contact with the projection portion 3e. When a load is further applied by a forceful rearward rotation thereof so that an extremely large load is applied to the ratchet plate 3 in the clockwise direction as illustrated in Fig. 12 while the reclining lock mechanism 4 is in the locked state, the ratchet plate 3 rotates against a frictional resistance force received from the stopper member 8 at the projection portion 3e, which pushes away the slide portion 82 of the stopper member 8. In this case, the frame members 18 and 19 of the upper frame 1d are tilted rearward:

Accordingly, in a case where the operation handle 75 is operated during the walk-in operation and at that time the ratchet plate 3 rotates by receiving the large load, the protruding portion 93b of the pawl 93 and the recess portion 3c of the ratchet plate 3 engage with each other to achieve the locked state of the reclining memory mechanism 9 without the operation of the operation lever of the reclining memory mechanism 9. In this state, the operation handle 75 of the reclining lock mechanism 4 is operated to thereby release the engagement between the internal teeth 25a of the gear plate 2 and the external teeth 54 and 64 of the pawls 50 and 60. Then, the seatback 1b is returned to a previous position by the application of a load in a direction (for example, forward direction) opposite from a direction where the load is previously applied to thereby change the memory angle (for example, rearward direction). In such state, the operation handle 75 is released to cause the external teeth 54 and 64 of the pawls 50 and 60 to engage with the internal teeth 25a of the gear plate 2.

According to the aforementioned embodiment, the slide portion 82 of the stopper member 8 frictionally engages with the slide surface 3f of the ratchet plate 3 integrally fixed to the gear plate 2. Thus, the gear plate 2 receives a resistance force against the relative rotation with respect to the lower plate 1. Therefore, even when the rotation of the gear plate 2 relative to the lower plate 1 is permitted by the reclining lock mechanism 4 in a state where the rotations of the frame members 18 and 19 relative to the ratchet plate 3 are permitted by the reclining memory mechanism 9, the rotation of the gear plate 2 relative to the lower plate 1 is restricted. As a result, the change of the reclining memory angle determined on the basis of the relative position between the gear plate 2 and the lower plate 1 is restrained. In addition, even when a load is applied to the gear plate 2, the rotation of the ratchet plate 3 is restricted by the stopper member 8, thereby restraining the change of the reclining memory angle.

Further, the spring 80 is disposed around the pivot hole 81 of the stopper member 8 for biasing the stopper member 8 to rotate in a direction where the slide portion 82 makes contact with the ratchet plate 3. In a case where a large load that exceeds the biasing force of the spring 80 is applied to the ratchet plate 3 and that exceeds the frictional engagement force of the stopper member 8, the rotation of the ratchet plate 3 is permitted, thereby preventing the large load from being concentrated and applied to the slide portion 82 of the stopper member 8. The deformation, damage, and the like of the stopper member 8 are avoidable accordingly. The excessive strength of the stopper member 8 is not required. Further, increase of weight, cost, and space of the stopper member 8 for ensuring the strength are nor required.

When the large load is applied to the ratchet plate 3, the slide portion 82 of the stopper member 8 slidably moves along the slide surface 3f. Then, the movement of the slide portion 82 is blocked by the projection portion 3e that extends from the slide surface 3f. Accordingly, the ratchet plate 3 is prevented from excessively rotating to thereby restrain the change of the reclining memory angle.

When the seatback 1b is tilted rearward in a state where the aforementioned improper operation is conducted, the projection 27c of the gear plate 2 makes contact with the projection 51 of the pawl 50, so that the rotation of the gear plate 2 in the counterclockwise direction is restricted. Accordingly, the upper frame 1d is prevented from rotating beyond an engagement point (i.e., predetermined rotational position) between the protruding portion 93b of the pawl 93 of the reclining memory mechanism and the recess portion 3c of the ratchet plate 3 by means of the contact between the projections 27c and 51. As a result, the protruding portion 93b of the pawl 93 is returned to a state to engage with the recess portion 3c of the ratchet plate 3.

The embodiment of the present invention is not limited to the above and various modifications, changes, and the like are available as long as a principle of the invention is secured.
A seat reclining apparatus for a vehicle (10) includes a lower frame (1c), a lower plate (1), an upper plate (20), an upper frame (1d), a first lock mechanism (4) arranged between the lower plate (1) and the upper plate (20) for permitting and restricting a relative rotation of the upper plate (20) to the lower plate (1), a second lock mechanism (9) arranged between the upper frame (1d) and the upper plate (20) for permitting and restricting a relative rotation of the upper frame (1d) to the upper plate (20), and a stopper member (8) rotatably supported by the lower frame (1c) and frictionally engageable with the upper plate (20), the stopper member (8) applying a resistance force to the relative rotation of the upper plate (20) to the lower plate (1).

## Claims

1. A seat reclining apparatus for a vehicle (10), comprising:
a lower frame (1c) supporting a seat cushion (1a) of a seat for the vehicle;
a lower plate (1) mounted on the lower frame (1c);
an upper plate (20) roratably supported by the lower plate (1);
an upper frame (1d) supporting a seatback (1b) of the seat for the vehicle and roratably supported by the lower frame (1c) via the upper plate (20) and the lower plate (1), the upper frame (1d) being relatively rotatable with respect to the upper plate (20);
a first lock mechanism (4) arranged between the lower plate (1) and the upper plate (20), the first lock mechanism (4) permitting and restricting a relative rotation of the upper plate (20) to the lower plate (1);
a second lock mechanism (9) arranged between the upper frame (1d) and the upper plate (20), the second lock mechanism (9) permitting and restricting a relative rotation of the upper frame (1d) to the upper plate (20); and
a stopper member (8) rotatably supported by the lower frame (1c) and frictionally engageable with the upper plate (20), the stopper member (8) applying a resistance force to the relative rotation of the upper plate (20) to the lower plate (1).

2. The seat reclining apparatus (10) according to claim 1, wherein the stopper member (8) is formed into an elongated lever shape including a support portion (81) at a first end (8a) and a slide portion (82) at a second end (8b), the support portion (81) being rotatably supported by the lower frame (1c) and the slide portion (82) being frictionally engageable with the upper plate (20), the seat reclining apparatus (10) further including a spring (80) of which one end (80a) engages with the stopper member (8) and of which the other end (80b) is supported by the lower frame (1c), the spring (80) being disposed around the support portion (81) and biasing the stopper member (8) to rotate in a direction where the slide portion (82) makes contact with the upper plate (20).

3. The seat reclining apparatus (10) according to claim 2, wherein the upper plate (20) includes a peripheral surface (3f) with which the slide portion (82) of the stopper member (8) makes contact and a projection portion (3e) continuously formed from the peripheral surface (3f) to extend therefrom and making contact with an end of the slide portion (82) to restrict the relative rotation of the upper plate (20) to the lower plate (1).

4. The seat reclining apparatus (10) according to any one of claims 1 through 3, wherein the upper plate (20) includes an internally toothed gear plate (2) including internal teeth (25a) engageable and disengageable with the first lock mechanism (4) and a ratchet plate. (3) fixed to the internally toothed gear plate (2) and including external teeth (3c) engageable and disengageable with the second lock mechanism (9).

5. The seat reclining apparatus (10) according to claim 4, wherein the ratchet plate (3) includes the peripheral surface (3f) and the projection portion (3e).
